# EUROPÄISCHE PATENTSCHRIFT

(11) **EP 1 329 910 B1**
(45) Veröffentlichungstag und Bekanntmachung des Hinweises auf die Patenterteilung: **05.03.2008**
(21) Anmeldenummer: 02027334.8
(22) Anmeldetag: 07.12.2002
(51) Int. Cl.: H01B 3/44, H01B 5/10, H01B 5/12

(54) **Verfahren zur Herstellung eines Wickelbandes aus ungesintertem Polytetrafluorethylen**
Process for producing a winding tape of non sintered polytetrafluorethylene
Procédé de production de ruban d'enroulement à base de polytétrafluoroéthylène non réfractaire

(30) Priorität: 18.01.2002 DE 10201833
(43) Veröffentlichungstag der Anmeldung: 23.07.2003
(73) Patentinhaber: HEW-KABEL /CDT GmbH & Co. KG, 51688 Wipperfürth (DE)
(72) Erfinder: Schwamborn, Klaus, 51676 Wipperfürth (DE); Steffes, Walter, 51676 Wipperfürth (DE)
(74) Vertreter: Mende, Eberhard

(56) Entgegenhaltungen:
- EP-A- 0 790 624
- CH-A- 562 098
- DE-A1- 3 214 447
- DE-A1- 3 636 621
- DE-A1- 4 103 540

## Beschreibung

Die vorliegende Erfindung betrifft ein Verfahren zur Herstellung eines Wickelbandes aus ungesintertem Polytetrafluorethylen, bei dem Polytetrafluorethylenpulver mit einem Schmier- oder Gleitmittel vermischt, das Material zu einem zylinderförmigen Rohling verpreßt und dieser Rohling zunächst zu einem Strang geringerer äußerer Abmessungen ausgepreßt und anschließend in die Bandform ausgewalzt wird.

Ein Verfahren der gattungsgemäßen Art ist z.B. aus dem Schweizer Patent 562 098 bekannt. Hierbei ist der ausgepreßte Strang geringerer äußerer Abmessungen ein flaches Band rechteckförmigen Querschnitts, das praktisch ohne Veränderung seiner Breite zu einem dünnen Band ausgewalzt wird. Die Längenzunahme beträgt dabei das ungefähr 5 bis 20-fache seiner ursprünglichen Länge. Abgesehen davon, daß bei einem solchen Band, wenn es denn als Wickelband verwendet wird, Stoßkanten an der Oberfläche nicht zu vermeiden sind, führt das Auspressen des Pulver - Schmiermittelgemisches in die Bandform und die anschließende Längung des Bandes durch Auswalzen zu einer ausschließlichen Orientierung der Materialteilchen in Achs- oder Bandrichtung. Diese einseitige Materialausrichtung kann z.B. bei Temperaturwechselbeanspruchung Anlaß zu Längsrissen im Endprodukt sein.

Ausgehend von diesem Stand der Technik liegt der Erfindung die Aufgabe zugrunde, ein Wickelband zu schaffen, das ohne das Endprodukt störende Stoßkanten insbesondere für die Isolierung elektrischer Kabel und Leitungen eingesetzt werden kann. Hierbei kommt es nämlich darauf an, daß eine aus einem Wickelband hergestellte Isolierung einer durch Extrusion von Isoliermaterialien erzeugten Isolierhülle, soweit Spaltenfreiheit und Kompaktheit sowie Oberflächenbeschaffenheit zu betrachten sind, gleichwertig ist. Gleichzeitig ist gegenüber dem bekannten Wickelband die Bandqualität selbst zu verbessern, z.B. um die Gefahr von Längsrissen im Band auszuschließen.

Gelöst wird diese Aufgabe gemäß der Erfindung dadurch, daß der aus dem Rohling gepreßte Strang eine Rundschnur ist, die in radialer Richtung druckbelastet derart zu einem Band ausgewalzt wird, daß die im druckbelasteten mittleren Bereich verbleibende Materialmenge aus Polytetrafluorethylenpulver und Schmier- oder Gleitmittel größer als die zu den Bandkanten hin verbleibende Materialmenge ist. Diese Umformung einer Rundschnur zum Flachband vermeidet die nachteilige Orientierung der Materialteilchen in nur eine Richtung. Die ungleichmäßige Materialverteilung über den Querschnitt mit einer Materialanhäufung im mittleren und einer Materialverringerung in den beidseitigen Randbereichen des Bandes führt zu einer weitestgehend stoßfreien Bewicklung, die zudem, wenn mehrere Wicklungen übereinander angeordnet und das Material nach dem Wickeln des Bandes einem Sintervorgang unterworfen wird, zu einer Kompaktheit und Hohlraumfreiheit der Bewicklung führt, die ohne weiteres mit einer extrudierten Hülle verglichen werden kann.

Eine Qualitätsverbesserung des Bandes ergibt sich insbesondere dann, wenn, wie in Weiterführung der Erfindung vorgesehen, die Verlängerung des ausgewalzten Bandes gegenüber der Länge der gepreßten Rundschnur lediglich das 1 bis 3-fache, vorzugsweise das 1,2 bis 2,2-fache beträgt. Damit bleibt die Längsorientierung der Materialteilchen mit ihren möglichen schädlichen Folgen für die Bandqualität auf ein Minimum beschränkt.

Die bei der Herstellung des Wickelbandes nach der Erfindung vorgenommene Verteilung der Materialmengen über den Bandquerschnitt erfolgt vorteilhaft beim Auswalzen durch eine ein- oder beidseitige Abflachung der Krümmung der Umfläche der Rundschnur im zuerst druckbelasteten mittleren Bereich. Beim Auswalzen der Rundschnur zum Band in Achsrichtung erfolgt also im Gegensatz zum bekannten Verfahren (CH-PS 562 098) gleichzeitig eine Umverteilung der durch die Rundschnur angelieferten Materialmenge im wesentlichen auch in Richtung der Bandkanten. Dabei kann die Umformung der Rundschnur je nach Anwendungszweck des daraus hergestellten Bandes unterschiedlich ausfallen. So kann es zweckmäßig sein, wenn die Rundschnur im Querschnitt ovalförmig mit spitz zulaufenden Randbereichen ausgewalzt wird, das Wickelband also eben diesen Querschnitt erhält.

Als besonders vorteilhaft hat es sich jedoch erwiesen, die Rundschnur zu einem Flachprofil auszuwalzen, mit von der Mitte nach beiden Seiten spitz zulaufenden, weitgezogenen Randbereichen und regelmäßig verlaufenden Bandkanten. Ein so hergestelltes Band eignet sich besonders für die Herstellung von Umhüllungen - Isolierungen oder Mäntel - elektrischer Kabel und Leitungen. Die regelmäßig verlaufenden glatten Bandkanten bewirken nämlich im Zusammenhang mit dem verstärkten mittleren Bereich beim Sintern der Bewicklung bei etwa 350 - 400°C eine besonders glatte, in sich geschlossene äußere Umfläche.

Wesentlich für das nach dem Verfahren nach der Erfindung hergestellte Wickelband ist ferner, daß die Breite des ausgewalzten Bandes mindestens dem 6-fachen, vorzugsweise dem 8 bis 14-fachen des Durchmessers der Rundschnur entspricht. Dies beinhaltet einen besonders hohen Verformungsgrad gerade auch quer zur Walzrichtung, der sich vorteilhaft auf die Bandqualität auswirkt.

Die vorliegende Erfindung befaßt sich ebenfalls mit einem Verfahren zur Herstellung eines Wickelbandes, bei dem der oben näher beschriebene Rohling zunächst zu einem Strang geringerer äußerer Abmessungen ausgepreßt und anschließend im Formspalt eines Walzenpaares zu einem Band ausgewalzt wird. Dabei ist für die Erfindung wesentlich, daß die Oberfläche mindestens einer Walze während des Auswalzens der Rundschnur zum Band druckbelastet verformt wird. Damit erhält das ausgewalzte Band eine von der Rechteckform entsprechend dem Stand der Technik abweichende Querschnittsform, die sich insbesondere durch eine Verformung der Bandkantenbereiche auszeichnet. Diese Verformung kann soweit reichen, daß die Dicke der Bandkanten im ausgewalzten Zustand gegen Null hin ausläuft.

Das Ausmaß der Verformung der Walzenoberfläche wird vom jeweiligen Querschnitt (Durchmesser) der Rundschnur gesteuert. Diese Steuerung kann beispielsweise durch eine hydraulische oder pneumatische Druckbeaufschlagung des jeweiligen Walzenkörpers erfolgen, der sich bei entsprechender Druckbe- oder Druckentlastung entsprechend mechanisch mehr oder weniger verformt.

Besonders vorteilhaft ist es jedoch, insbesondere auch im Hinblick auf eine Vereinfachung des Fertigungsverfahrens und eine Erhöhung der Betriebssicherheit im Fertigungsablauf, wenn, wie nach der Erfindung vorgesehen, die Verformung der Walzenoberfläche in Abhängigkeit vom Querschnitt (Durchmesser) der Rundschnur durch diese selbst erfolgt. Durch die in den Walzenspalt eingeführte Rundschnur erfolgt dort ein Druckaufbau, der nicht nur, wie bei bekannten Walzverfahren, zu einer Umformung des einlaufenden Vorproduktes, sondern gleichzeitig zu einer Verformung der druckbelasteten Oberfläche eines oder beider Walzenkörper führt. Bei erfindungsgemäßem Einsatz einer Rundschnur als Vorprodukt ergibt sich die höchste Druckbeanspruchung zunächst im mittleren Bereich, die sich bei entsprechender Druckbelastung der Walzen und damit einhergehender Verformung der Oberfläche mindestens einer Walze als verdickter mittlerer Bereich des ausgewalzten Bandes darstellt. Aufgrund der Verformbarkeit mindestens einer Walzenoberfläche wirkt sich die von den Walzen geleistete Verformungsarbeit aber insbesondere auch quer zur Walzrichtung aus. Von der zunächst radial druckbeanspruchten Rundschnur wird das Schnurmaterial weitläufig nach beiden Seiten, ausgehend von der Schnurmitte, stetig abnehmend längs der Walzenoberfläche verteilt. Wesentlich für das erfindungsgemäße Verfahren ist, daß die Rundschnur unmittelbar vor dem Formspalt des Walzenpaares geführt ist. Dies führt zu einer Vergleichmäßigung des Fertigungsablaufes bei gleichzeitiger Erhöhung der Bandqualität.

Bekannt ist bereits ein Wickelband aus ungesintertem Polytetrafluorethylen, verwendet für Isolierhülten elektrischer Kabel und Leitungen, das eine plankonvexe Querschnittsform aufweist, mit einer gekrümmten oberen und einer geraden unteren Begrenzungslinie (DE-PS 32 14 447).

Die vorliegende Erfindung sieht eine Verbesserung dieses bekannten Wickelbandes vor, insbesondere hinsichtlich der Kompaktheit und Porenfreiheit einer aus einem Wickelband hergestellten Hülle. Die Verbesserung besteht darin, daß das Wickelband als Flachprofil mit von der Mitte nach beiden Seiten spitz zulaufenden Randbereichen ausgebildet ist, mit an den Kanten regelmäßigem Bandverlauf. Grundlage für diese ausgeprägte flache Querschnittsform mit von der Mitte her gleichförmig, d.h. stufenlos, nach beiden Seiten hin sich verringernder Banddicke sind die Abmessungen der jeweils verwendeten Rundschnur (Ausgangsmaterial) im Verhältnis zu den Abmessungen des hieraus hergestellten Wickelbandes, sowie der Einsatz von Walzen mit verformbarer Oberfläche.

In Durchführung der Erfindung sind die Ränder des Bandes breit gezogen, wobei die Randbreite beidseitig des die Banddicke bestimmenden mittleren Bereiches mindestens 45, vorzugsweise 50 bis 80% der gesamten Breite des Wickelbandes beträgt. Dieses weit in die Breite gezogene, sich zu den Bandkanten hin ständig verjüngende Wickelband führt nach der Sinterung zu einem Endprodukt besonders glatter Oberflächenbeschaffenheit.

Dabei kann der Querschnitt des erfindungsgemäßen Wickelbandes in etwa die Form eines in Richtung der Schmalseiten breit gezogenen Rechtecks aufweisen, wobei von der Bandmitte aus nach beiden Seiten die Banddicke bis zum Rand des Bandes stufenlos abnimmt. Eine besonders vorteilhafte Ausführungsform der Erfindung ergibt sich dann, wenn das Band im Querschnitt in etwa die Form einer flachen Schale aufweist, wobei von der Bandmitte aus nach beiden Seiten die Banddicke bis zum Rand des Bandes, d.h., bis zu den Bandkanten, stufenlos abnimmt.

Die Banddicke, gemessen in der Bandmitte, beträgt bei einem Band nach der Erfindung vorteilhaft 20 bis 200 µm, vorzugsweise 40 bis 160 µm, und im Randbereich 5 µm und weniger. Diese Abmessungen sind wesentlich, wenn ein solches Band als Wickelband insbesondere für Umhüllungen elektrischer Kabel und Leitungen verwendet werden soll, wo es darauf ankommt, eine kompakte Hülle mit einer glatten Oberfläche zu gewährleisten.

Hierzu trägt ferner bei, wenn nach einem weiteren Erfindungsgedanken die Bandbreite 5 bis 50mm, vorzugsweise 10 bis 30 mm, beträgt. Die vorzugsweise Bandbreite entspricht in etwa einem Schnurdurchmesser von 0,9 bis 1,7 mm.

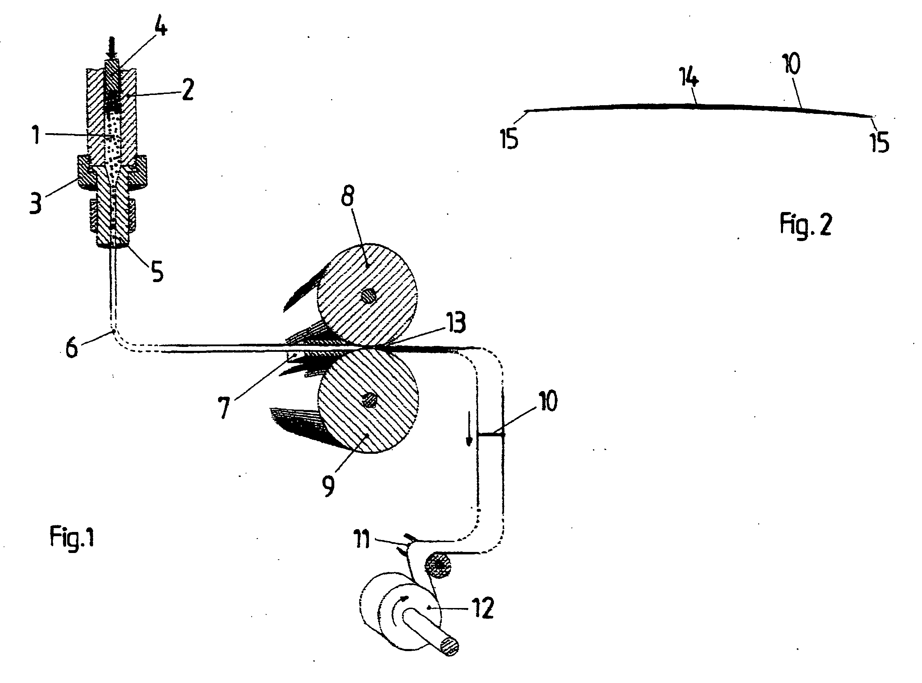

Die Erfindung sei an Hand der in den Figuren 1 und 2 dargestellten Ausführungsbeispiele näher erläutert.

Die Figur 1 veranschaulicht das erfindungsgemäße Fertigungsverfahren, die Figur 2 zeigt den Querschnitt eines nach diesem Verfahren hergestellten Wickeibandes.

Ein aus Polytetrafluorethylenpulver und Schmier- oder Gleitmittel gepreßter Rohling 1 ist in den Aufnehmer 2 einer Strangpresse 3 eingeführt. Mit Hilfe des Preßstempels 4 wird aus dem Preßmundstück 5 eine Rundschnur 6 ausgepreßt, die unmittelbar, oder auch nach einer Zwischenlagerung in einem geeigneten Vorratsbehälter, der Führungsdüse 7 zugeführt wird. Diese Führungsdüse 7 endet mit ihrem Ausgang unmittelbar vor dem Walzspalt der beiden Walzen 8 und 9. Die Oberfläche mindestens einer der beiden Walzen 8 und 9 ist beim Auswalzen der Rundschnur 6 zum Band 10 unter dem Einfluß des durch das Material der Rundschnur bewirkten Preß- oder Walzdrucks verformbar, so daß das ausgewalzte Band 10 nicht einen rechteckförmigen Querschnitt, sondern ein flach gewalztes Querschnittsprofil mit spitz zulaufenden Randbereichen erhält. Das Band 10 wird über die Umlenkrolle 11 geführt und mittels der Aufwickelvorrichtung 12 aufgewickelt. Es handelt sich hierbei um ein noch ungesintertes Wickelband, das erst nach der Herstellung des Wickelkörpers, z. B. der Isolierung eines elektrischen Leiters, dem Sintervorgang unterworfen wird.

Nach dem Sintervorgang ist ein Abwickeln der einzelnen Wickellagen nicht mehr möglich, auch nicht auf kurzen Längenabschnitten, wie es bei der Verwendung im Querschnitt rechteckförmiger Wickelbänder aus dem gleichen Material der Fall ist. Die Oberfläche einer mit dem Band nach der Erfindung hergestellten elektrischen Isolierung ist in sich geschlossen und, da sie praktisch stoßkantenfrei ist, auch glatt.

Die nachfolgenden Beispiele verdeutlichen noch einmal das Wesentliche der vorliegenden Erfindung bei gleichem Ausgangsmaterial, nämlich Polytetrafluorethylen und einer gewünschten Banddicke von 50 µm. Der Begriff Polytetrafluorethylen beinhaltet hier auch Tetrafluorethylen - Polymere, die mit modifizierenden Zusätzen versehen sind, jedoch in einer solchen Menge, daß das Polymere, wie das Polytetrafluorethylen selbst, aus der Schmelze nicht verarbeitbar ist.

### Beispiel 1

Ausgepreßt wurde eine Rundschnur mit einem Durchmesser von 0,93 mm und in einer Länge von 15 m. Diese Rundschnur wurde entsprechend dem erfindungsgemäßen Verfahren ausgewalzt zum Wickelband in einer Länge von 31 m, einer Bandbreite von 11 mm und einer Banddicke von 50 µm.

### Beispiel 2

Ausgepreßt wurde eine Rundschnur mit einem Durchmesser von 1,17 mm und in einer Länge von 15 m. Das Auswalzen ergab ein Band in einer Länge von 26,8 m, einer Bandbreite von 15 mm und der geforderten Banddicke von 50 µm.

### Beispiel 3

In diesem Fall wurde eine Rundschnur mit einem Durchmesser von 1,30 mm und in einer Länge von 15 m ausgepreßt. Das Auswalzen dieser Rundschnur in die Bandform entsprechend der Erfindung ergab ein Wickelband in einer Länge von 28,9 m, einer Bandbreite von 17 mm und der Banddicke, gemessen in der Bandmitte, von 50 µm.

Soll die Banddicke abweichend von den Beispielen 1 bis 3 erhöht werden, sind die anderen Parameter entsprechend zu ändern.

### Beispiel 4

Ausgepreßt wurde eine Rundschnur mit einem Durchmesser von 2,10 mm und einer Länge von 15 m. Diese Rundschnur wurde entsprechend dem Verfahren nach der Erfindung zum Wickelband ausgewalzt in einer Länge von 21,20 m, einer Bandbreite von 24 mm sowie einer Banddicke von 150 µm.

### Beispiel 5

In diesem Fall wurde eine Rundschnur mit einem Durchmesser von 1,65 mm und in einer Länge von 15 m ausgepreßt. Das Auswalzen dieser Rundschnur in die Bandform entsprechend der Erfindung ergab ein Wickelband in einer Länge von 20,85 m, einer Bandbreite von 16 mm und einer Banddicke, gemessen in der Bandmitte, von 100 µm.

Wesentlich bei der Herstellung der Wickelbänder nach den Beispielen 1 bis 5 ist, daß durch die Verformbarkeit der Oberfläche mindestens einer Walze 8 oder 9 das durch die Rundschnur 6 in den Walzenspalt 13 eingebrachte Bandmaterial über die Bandbreite unterschiedlich druckbelastet ausgeformt wird.

In vergrößertem Maßstab zeigt die Figur 2 in etwa den Querschnitt eines nach der Erfindung hergestellten Wickelbandes 10. Durch das wegen der Verformbarkeit mindestens einer Walze unter Druckbelastung weitgehend freie Fließen des Bandmaterials von der Bandmitte 14 quer zur Abzugsrichtung ergibt sich eine schlanke Querschnittsform, etwa schalenförmig, mit spitz in Richtung der Bandkanten 15 zulaufenden Randbereichen. Aufgrund dieser besonderen Umformung der Rundschnur 6 zum Band 10 verlaufen auch die Bandkanten 15 regelmäßig glatt. Dies führt zu einer problemlosen Weiterverarbeitung des erfindungsgemäßen Wickelbandes und damit z.B. zu Isolierungen elektrischer Kabel und Leitungen hoher Qualität.

## Patentansprüche

1. Verfahren zur Herstellung eines Wickelbandes aus ungesintertem Polytetrafluorethylen, bei dem Polytetrafluorethylenpulver mit einem Schmier- oder Gleitmittel vermischt, das Material zu einem zylinderförmigen Rohling verpreßt und dieser Rohling zunächst zu einem Strang geringerer äußerer Abmessungen ausgepreßt und anschließend in die Bandform ausgewalzt wird, **dadurch gekennzeichnet, daß** der aus dem Rohling (1) gepreßte Strang eine Rundschnur (6) ist, die in radialer Richtung druckbelastet derart zu dem Band **(**10) ausgewalzt wird, daß die im druckbelasteten mittleren Bereich verbleibende Materialmenge aus Polytetrafluorethylenpulver und Schmier- oder Gleitmittel größer als die zu den Bandkanten hin verbleibende Materialmenge ist.

2. Verfahren nach Anspruch 1, **dadurch gekennzeichnet, daß** die Verlängerung der ausgewalzten Bandlänge gegenüber der Länge der gepreßten Rundschnur (6) das 1 bis 3-fache, vorzugsweise das 1,2 bis 2,2-fache beträgt.

3. Verfahren nach Anspruch 1 oder 2, **dadurch gekennzeichnet, daß** die Verteilung der Materialmengen über den Bandquerschnitt beim Auswalzen durch eine ein- oder beidseitige Abflachung der Krümmung der Umfläche der Rundschnur (6) im druckbelasteten mittleren Bereich erfolgt.

4. Verfahren nach Anspruch 1 oder einem der folgenden , **dadurch gekennzeichnet, daß** die Rundschnur (6) im Querschnitt ovalförmig mit spitz zulaufenden Randbereichen ausgewalzt wird.

5. Verfahren nach Anspruch 1 oder einem der folgenden, **dadurch gekennzeichnet, daß** die Rundschnur (6) zu einem Flachprofil mit von der Mitte (14) nach beiden Seiten spitz zulaufenden Randbereichen und regelmäßig verlaufenden Kanten (15) ausgewalzt wird.

6. Verfahren nach Anspruch 1 oder einem der folgenden, **dadurch gekennzeichnet, daß** die Breite des ausgewalzten Bandes (10) mindestens dem 6-fachen, vorzugsweise dem 8 bis 14-fachen des Durchmessers der Rundschnur (6) entspricht.

7. Verfahren nach Anspruch 1 oder einem der folgenden, bei dem der ausgepresste Strang geringerer äußerer Abmessungen im Formspalt eines Walzenpaares zu einem Band ausgewalzt wird, **dadurch gekennzeichnet, daß** die Oberfläche mindestens einer Walze (8;9) während des Auswalzens der Rundschnur (6) zum Band (10) druckbelastet verformt wird.

8. Verfahren nach Anspruch 7, **dadurch gekennzeichnet, daß** das Ausmaß der Verformung der Walzenoberfläche in Abhängigkeit vom jeweiligen Querschnitt (Durchmesser) der Rundschnur (6) gesteuert wird.

9. Verfahren nach Anspruch 8, **dadurch gekennzeichnet, daß** die Steuerung der Verformung durch Druckbeaufschlagung des Walzenkörpers (8;9) erfolgt.

10. Verfahren nach Anspruch 7, **dadurch gekennzeichnet, daß** die Verformung der Walzenoberfläche in Abhängigkeit vom Querschnitt (Durchmesser) der Rundschnur (6) durch diese selbst erfolgt.

11. Verfahren nach Anspruch 7 oder einem der folgenden, **dadurch gekennzeichnet, daß** die Rundschnur (6) unmittelbar vor dem Formspalt des Walzenpaares (8;9) eine Führungsdüse (7) durchläuft.

## Claims

1. Method for producing a winding tape from non-sintered polytetrafluoroethylene, in which polytetrafluoroethylene powder is mixed with a lubricant or slip agent, the material is pressed to form a cylindrical blank and this blank is firstly extruded to form a strand with reduced external dimensions and then rolled out into the tape shape, **characterised in that** the strand pressed from the blank (1) is a round string (6), which, pressure-loaded in the radial direction, is rolled out to form the tape (10), **in that** the material quantity remaining in the pressure-loaded central region made of polytetrafluoroethylene powder and lubricant or slip agent is greater than the material quantity remaining toward the tape edges.

2. Method according to claim 1, **characterised in that** the elongation of the rolled-out tape length compared to the length of the pressed round string (6) is a factor of 1 to 3, preferably 1.2 to 2.2.

3. Method according to claim 1 or 2, **characterised in that** the distribution of the material quantities over the tape cross-section during the rolling-out, takes place by means of a one-sided or two-sided flattening of the curvature of the peripheral face of the round string (6) in the pressure-loaded central region.

4. Method according to claim 1 or any one of the following claims, **characterised in that** the round string (6) is rolled-out so as to be oval in cross-section with tapering edge regions.

5. Method according to claim 1 or any one of the following claims, **characterised in that** the round string (6) is rolled-out to form a flat profile with edge regions, which taper from the centre (14) to both sides, and regularly extending edges (15).

6. Method according to claim 1 or any one of the following claims, **characterised in that** the width of the rolled-out tape (10) corresponds to at least 6-times, preferably 8 to 14 times the diameter of the round string (6).

7. Method according to claim 1 or any one of the following claims, in which the pressed-out strand with reduced external dimensions is rolled out to form a tape in the forming gap of a pair of rollers, **characterised in that** the surface of at least one roller (8; 9) is deformed by pressure loading during the rolling out of the round string (6) to form the band (10).

8. Method according to claim 7, **characterised in that** the extent of the deformation of the roller surface is controlled as a function of the respective cross-section (diameter) of the round string (6).

9. Method according to claim 8, **characterised in that** the deformation is controlled by pressure loading of the roller body (8; 9).

10. Method according to claim 7, **characterised in that** the deformation of the roller surface as a function of the cross-section (diameter) of the round string (6) is carried out by the latter itself.

11. Method according to claim 7 or any one of the following claims, **characterised in that** the round string (6) passes through a guide nozzle (7) immediately upstream from the forming gap of the pair (8; 9) of rollers.

## Revendications

1. °) Procédé de fabrication d'un ruban d'enroulement à base de polytétrafluoréthylène dans lequel on mélange de la poudre de polytétrafluoréthylène avec un lubrifiant, on compresse ce matériau en une ébauche cylindrique et on exprime cette ébauche d'abord sous la forme d'un boyau de faibles dimensions extérieures, et laminé ensuite sous forme de bande,
**caractérisé en ce que**
le boyau pressé à partir de l'ébauche (1) est un cordon circulaire (6) laminé en bande (10) sous pression dans le sens radial de manière à ce que la quantité de matériau, constitué de poudre de polytétrafluoréthylène et de lubrifiant, restant dans la zone centrale soumise à la pression soit supérieure à celle restant dans les bordures de bande.

2. °) Procédé selon la revendication 1,
**caractérisé en ce que**
l'allongement de la longueur de bande laminée est égal de 1 à 3 fois, de préférence de 1,2 à 2,2 fois par rapport à la longueur du cordon circulaire pressé (6).

3. °) Procédé selon la revendication 1 ou la revendication 2,
**caractérisé en ce que**
la répartition de la matière sur la section de la bande a lieu lors du laminage grâce à un aplatissement unilatéral ou bilatéral de la courbure de la surface périphérique du cordon circulaire (6) dans la zone centrale soumise à la pression.

4. °) Procédé selon la revendication 1 ou l'une des revendication suivantes,
**caractérisé en ce que**
le cordon circulaire (6) est laminé en une section ovale avec des zones marginales se terminant en pointe.

5. °) Procédé selon la revendication 1 ou l'une des revendication suivantes,
**caractérisé en ce que**
le cordon circulaire (6) est laminé en un profilé plat qui comporte des zones marginales se terminant en pointe depuis le centre (14) vers les deux côtés et il a des arêtes (15) régulières.

6. °) Procédé selon la revendication 1 ou l'une des revendication suivantes,
**caractérisé en ce que**
la largeur de la bande laminée (10) correspond au moins 6 fois, de préférence de 8 à 14 fois le diamètre du cordon circulaire (6).

7. °) Procédé selon la revendication 1 ou l'une des revendication suivantes,
dans lequel
le boyau exprimé, de faibles dimensions extérieures, est laminé en bande dans la fente de façonnage d'une paire de cylindres,
**caractérisée en ce que**
la surface d'au moins un cylindre (8 ;9) est déformée sous pression en une bande (10) pendant le laminage du cordon circulaire (6).

8. °) Procédé selon la revendication 7,
**caractérisé en ce que**
l'ampleur de la déformation de la surface des cylindres est pilotée en fonction de la section respective (diamètre) du cordon circulaire (6).

9. °) Procédé selon la revendication 8,
**caractérisé en ce que**
la déformation est pilotée par l'application d'une pression au corps de rouleau (8 ; 9).

10. °) Procédé selon la revendication 7,
**caractérisé en ce que**
la déformation de la surface des cylindres dépend de la section (diamètre) du cordon circulaire (6).

11. °) Procédé selon la revendication 7,
**caractérisé en ce que**
le cordon circulaire (6) traverse une buse de guidage (7) immédiatement avant la fente de façonnage de la paire de cylindres (8 ;9).
